# EUROPÄISCHE PATENTANMELDUNG

(11) **EP 4 850 517 A1**
(43) Veröffentlichungstag der Anmeldung: **09.12.2026**
(21) Anmeldenummer: 26177540.7
(22) Anmeldetag: 08.05.2026
(51) Int. Cl.: A01D 41/12, A01D 43/08, B62D 9/00

(54) **LANDWIRTSCHAFTLICHES FAHRZEUG MIT ASYMMETRISCHEM RADSTAND**

(30) Priorität: 03.06.2025 DE 102025121579
(71) Anmelder: Maschinenfabrik Bernard Krone GmbH & Co. KG, 48480 Spelle (DE)
(72) Erfinder: Liebich, Philipp, 49479 Ibbenbüren (DE); Harpert, Tobias, 48739 Legden (DE)

(57) **Zusammenfassung**

Die Erfindung betrifft eine selbstfahrende landwirtschaftliche Erntemaschine (1). Sie weist eine Arbeitsmaschine zum Antreiben der Erntemaschine (1), ein Ernteaggregat zur Einwirkung auf landwirtschaftliches Erntegut, einen Maschinenrahmen (2), der von einer Längsmittelebene (LME) in zwei insbesondere zumindest teilweise spiegelsymmetrische Rahmenhälften unterteilt wird, und ein Fahrwerk auf, mit dem die Erntemaschine (1) an eine zur Längsmittelebene (LME) rechtwinklig ausgerichtete Bodenebene (BE) angrenzt, das zur Fortbewegung des Erntemaschine (1) in eine zur Längsmittelebene (LME) parallele Fahrtrichtung (FR) ausgebildet ist und das zumindest ein erstes Radpaar (10) aufweist, das aus einem ersten Rad (11), das drehbar um eine erste Drehachse (DA11) gelagert ist, und einem zweiten Rad (12) gebildet ist, das drehbar um eine zweite Drehachse (DA12) gelagert ist und dem ersten Rad (11) bezogen auf die Längsmittelebene (LME) zumindest teilweise gegenüberliegend angeordnet ist, wobei die erste Drehachse (DA11) und die zweite Drehachse (DA12) in einer Geradeausstellung des ersten Radpaares (10) jeweils rechtwinklig zur Längs-mittelebene (LME) ausgerichtet sind. Erfindungsgemäß ist das Fahrwerk derart ausgebildet, dass die erste Drehachse (DA11) zumindest in der Geradeausstellung des ersten Radpaares (10) relativ zur zweiten Drehachse (DA 12) in die Fahrrichtung (FR) versetzt angeordnet ist.

## Beschreibung

Die Erfindung betrifft eine selbstfahrende landwirtschaftliche Erntemaschine. Die Erntemaschine weist eine Arbeitsmaschine, ein Ernteaggregat, einen Maschinenrahmen und ein Fahrwerk auf. Die Arbeitsmaschine dient zum Antreiben der Erntemaschine. Das Ernteaggregat dient zur Einwirkung auf landwirtschaftliches Erntegut. Der Maschinenrahmen wird von einer Längsmittelebene in zwei Rahmenhälften unterteilt. Das Fahrwerk ist zur Fortbewegung der Erntemaschine in eine zur Längsmittelebene parallele Fahrtrichtung ausgebildet. Die Erntemaschine grenzt mit dem Fahrwerk an eine zur Längsmittelebene rechtwinklig ausgerichtete Bodenebene an. Das Fahrwerk weist zumindest ein erstes Radpaar auf, das aus einem ersten Rad und einem zweiten Rad gebildet ist. Das erste Rad ist drehbar um eine erste Drehachse gelagert. Das zweite Rad ist drehbar um eine zweite Drehachse gelagert. Das zweite Rad ist dem ersten Rad bezogen auf die Längsmittelebene zumindest teilweise gegenüberliegend angeordnet. Die erste Drehachse und die zweite Drehachse sind in einer Geradeausstellung des ersten Radpaares jeweils im Wesentlichen rechtwinklig zur Längsmittelebene ausgerichtet.

Eine derartige selbstfahrende landwirtschaftliche Erntemaschine ist beispielsweise als Feldhäcksler bekannt. Bei der Ernte dient das Fahrwerk zur Fortbewegung der Erntemaschine, z.B. über einen Acker, während das Ernteaggregat auf das Erntegut vom Acker einwirkt. Bei der bekannten Erntemaschine sind die erste Drehachse und die zweite Drehachse in der Geradeausstellung des ersten Radpaares koaxial ausgerichtet.

Selbstfahrende landwirtschaftliche Erntemaschinen sollten möglichst bodenschonend auf dem Acker zu bewegen sein. Zur Bodenschonung trägt eine möglichst große Aufstandsfläche bei, die durch eine Erhöhung der Größe der Räder, sowohl ihrer Durchmesser als auch ihrer Breite, zu erreichen ist. Zur Bodenschonung trägt außerdem eine Verkürzung des Fahrweges auf dem Acker bei. Der Fahrweg ist durch eine Vergrößerung der Wendigkeit, das heißt insbesondere eines möglichen Lenkwinkels, zu reduzieren. Sowohl die Vergrößerung der Aufstandsfläche als auch die Vergrößerung der Wendigkeit geht mit einem erhöhten Bauraumbedarf der Räder, insbesondere der lenkbaren Räder, einher. Der für die Räder zur Verfügung stehende Bauraum ist jedoch durch die über das Fahrwerk hinausgehenden Komponenten der Erntemaschine beschränkt. In aller Regel sind diese Komponenten asymmetrisch aufgebaut..

Neben der vorbeschriebenen, gattungsgemäßen Erntemaschine sind auch solche Erntemaschinen bekannt, die in einem sogenannten "Hundegang" fortzubewegen sind. Dabei sind sämtliche Drehachsen relativ zur Längsmittelebene um denselben Lenkwinkel, der kleiner als 90° ist, in dieselbe Richtung eingeschlagen. Das bedeutet, dass der Maschinenrahmen translatorisch in die Fahrtrichtung bewegt wird, während die Längsmittelebene zur Fahrtrichtung gleichbleibend angewinkelt ausgerichtet ist.

Aufgabe der vorliegenden Erfindung ist die Bereitstellung einer selbstfahrenden landwirtschaftlichen Erntemaschine, durch die eine verbesserte Bodenschonung zu erreichen ist.

Erfindungsgemäß ist das Fahrwerk der selbstfahrenden landwirtschaftlichen Erntemaschine derartig ausgebildet, dass die erste Drehachse zumindest in der Geradeausstellung des ersten Radpaares relativ zur zweiten Drehachse in die Fahrtrichtung versetzt angeordnet ist.

Bei der erfindungsgemäßen Erntemaschine handelt es sich bevorzugt um einen Feldhäcksler, einen Mähdrescher, eine Mähmaschine, einen Kartoffelroder oder einen Rübenroder. Bei der Arbeitsmaschine handelt es sich bevorzugt um einen Motor, üblicherweise um einen Dieselmotor. Die Arbeitsmaschine treibt insbesondere sowohl das Ernteaggregat als auch das Fahrwerk an.

Das Ernteaggregat wirkt insbesondere trennend und/oder schneidend auf das landwirtschaftliche Erntegut ein. Beispielsweise handelt es sich bei dem Ernteaggregat um eine Häckseltrommel, einen Corn-Cracker, eine Dreschtrommel, einen Mähholm, ein Siebband oder um einen Siebstern. Vorzugsweise weist die Erntemaschine frontseitig einen Erntevorsatz wie eine Pick-up, ein Getreideschneidwerk oder einen Maisvorsatz oder alternativ Rodeschare auf, die im Einsatz der Erntemaschine zumindest teilweise in den Boden eindringen. Die Erntemaschine weist bevorzugt eine Fahrerkabine für den Bediener der Erntemaschine auf, kann jedoch auch alternativ als autonome Erntemaschine ohne Fahrerkabine ausgebildet sein.

Die Arbeitsmaschine, das Ernteaggregat, das Fahrwerk und gegebenenfalls die Fahrerkabine sind, zumindest mittelbar, am Maschinenrahmen gelagert. Der Maschinenrahmen ist durch eine starre Konstruktion gebildet und weist bevorzugt zumindest zwei sich zumindest teilweise parallel erstreckende Längsträger auf. Der Maschinenrahmen wird von einer sich parallel zur Fahrtrichtung erstreckende Längsmittelebene in zwei Rahmenhälften geteilt.

Der Begriff Rahmenhälfte im Sinne der vorliegenden Schrift bezieht sich auf zwei Teilbereiche des Maschinenrahmens, die durch die gedachte Längsmittelebene voneinander abgegrenzt werden. Die Rahmenhälften müssen nicht notwendigerweise gleich groß oder symmetrisch sein. Insbesondere bei asymmetrischen Rahmenkonstruktionen können die Rahmenhälften in ihrer Größe und Form stark voneinander abweichen, ohne dass dies die grundsätzliche Einteilung in zwei Hälften beeinträchtigt.

Die Längsmittelebene ist ebenso wie die Bodenebene und die Drehachsen als Ebene bzw. Achse im geometrischen Sinne zu verstehen. Die Längsmittelebene ist ortsfest relativ zum Maschinenrahmen positioniert.

Bevorzugt kann der Maschinenrahmen zumindest teilweise spiegelsymmetrisch relativ zur Längsmittelebene ausgebildet sein. Dies ist so zu verstehen, dass zumindest ein Abschnitt des Maschinenrahmens spiegelsymmetrisch ausgebildet ist. Beispielsweise erstrecken sich die Längsträger zumindest teilweise parallel zur Längsmittelebene und sind gleich weit von ihr beabstandet und somit spiegelsymmetrisch zueinander angeordnet. Die beiden Rahmenhälften sind also zumindest teilweise spiegelsymmetrisch zur Längsmittelebene ausgebildet. Alternativ oder zusätzlich ist ein Teil der Erntemaschine, beispielsweise ein äußeres Gehäuse, spiegelsymmetrisch zur Längsmittelebene ausgebildet. Die Längsmittelebene erstreckt sich bevorzugt in die Längsrichtung des Maschinenrahmens und/oder der gesamten Erntemaschine und teilt den Maschinenrahmen bzw. die Erntemaschine bevorzugt in zwei im Wesentlichen gleich große Hälften. Es ist darauf hinzuweisen, dass Maschinenrahmen von selbstfahrenden landwirtschaftlichen Erntemaschinen in aller Regel nicht vollständig spiegelsymmetrisch ausgebildet sind, um die über den Maschinenrahmen hinausgehenden Komponenten der Erntemaschine, die nicht spiegelsymmetrisch ausgebildet oder anzuordnen sind, bestmöglich positionieren und verbinden zu können.

Die Räder des ersten Radpaares berühren insbesondere ebenso wie zumindest ein weiteres Rad des Fahrwerkes mittelbar die Bodenebene. Es handelt sich also bei der Erntemaschine insbesondere um ein Radfahrzeug und nicht um ein Raupenfahrzeug. Das Fahrzeug ist bevorzugt als zweispuriges Fahrzeug ausgebildet.

Das erste Radpaar ist entweder konstruktiv bedingt ausschließlich in der Geradeausstellung angeordnet oder wahlweise relativ zum Maschinenrahmen in die Geradeausstellung und aus der Geradeausstellung zu überführen. In der Geradeausstellung ist das erste Rad bevorzugt teilweise oder vollständig bezogen auf die Fahrtrichtung vor oder hinter dem weiteren Rad angeordnet.

Das erste Radpaar ist relativ zum Maschinenrahmen bevorzugt gefedert oder ungefedert gelagert. Vorzugsweise sind das erste und das zweite Rad des ersten Radpaares im Einsatz der Erntemaschine, insbesondere durch die Arbeitsmaschine, angetrieben oder zumindest antreibbar, beispielsweise durch eine wahlweise zu aktivierende Allrad-Funktion.

Die zumindest teilweise gegenüberliegende Anordnung der beiden Räder des ersten Radpaares in Bezug auf die Längsmittelebene ist insbesondere so zu verstehen, dass die erste Drehachse zumindest in der Geradeausstellung das zweite Rad schneidet und/oder die zweite Drehachse zumindest in der Geradeausstellung das erste Rad schneidet. Die beiden Räder des ersten Radpaares sind also hauptsächlich in eine zur Längsmittelebene rechtwinklige Querrichtung relativ zueinander versetzt angeordnet. Bevorzugt ist die Längsmittelebene zumindest in der Geradeausstellung von beiden Rädern des ersten oder, im Falle mehrerer Radpaare, jedes Radpaares gleich weit beabstandet. Die Durchmesser der Räder des ersten Radpaares sind bevorzugt identisch. Die Form des ersten Rades gleicht besonders bevorzugt der Form des zweiten Rades oder einer Spiegelung der Form des zweiten Rades.

Die erste Drehachse und die zweite Drehachse sind in einer Geradeausstellung des ersten Radpaares jeweils im Wesentlichen rechtwinklig zur Längsmittelebene ausgerichtet. Hieraus folgt, dass die die Räder in Geradeausstellung im Wesentlichen parallel zur Fahrtrichtung ausgerichtet sind. Geringe Abweichungen, z.B. durch Einstellung eines Radsturzes, sind jedoch möglich.

Die Räder des ersten Radpaares sind bevorzugt beide Vorderräder oder beide Hinterräder der Erntemaschine. Die beiden Räder sind in Bezug auf die Fahrtrichtung auf einer ähnlichen "Höhe" am Maschinenrahmen gelagert. Die beiden Räder sind insbesondere derart gelagert, dass der Abstand ihrer Drehachse zur Drehachse des jeweils anderen Rades geringer ist als der Abstand ihrer Drehachse zu jeder der Drehachsen, um die evtl. weitere, über das erste Radpaar hinausgehende Räder des Fahrwerkes drehbar sind. Die versetzte Anordnung der Drehachsen des ersten Radpaares zumindest in der Geradeausstellung bedeutet, dass die erste Drehachse bezogen auf die Fahrtrichtung vor oder hinter der zweiten Drehachse angeordnet ist. Beispielsweise ist das erste Rad bezogen auf die Längsmittelebene links und das zweite Rad bezogen auf die Längsmittelebene rechts angeordnet. Die erfindungsgemäße Ausbildung der Erntemaschine bedeutet, dass das linke Rad in der Geradeausstellung bezogen auf die Fahrtrichtung weiter vorne oder hinten angeordnet ist als das rechte Rad, wobei Teile der Räder sich weiterhin unmittelbar gegenüberliegen. Beispielsweise liegt eine auf die Fahrtrichtung bezogene vordere Hälfte des ersten Rades einer bezogen auf die Fahrtrichtung hinteren Hälfte des zweiten Rades bei Heranziehung der Längsmittelebene unmittelbar gegenüber. Bevorzugt bildet das Fahrwerk eine Einzelradaufhängung für die beiden Räder des ersten Radpaares aus.

Durch die erfindungsgemäße, versetzte Anordnung der Räder des ersten Radpaares zueinander lässt sich der für die Räder zur Verfügung stehende Bauraum effizienter nutzen. Es lassen sich größere Räder verbauen, ohne deren Beweglichkeit einschränken zu müssen oder anderweitige Umbauten vornehmen zu müssen. Dadurch ist die Aufstandsfläche und damit die Bodenschonung auf einfache Weise zu vergrößern.

Beispielsweise verläuft bei einer als Feldhäcksler ausgebildeten Erntemaschine ein Hauptriemen, der insbesondere die Arbeitsmaschine mit dem Ernteaggregat verbindet, vor dem ersten Rad des ersten Radpaares entlang. Gegenüberliegend erstreckt sich eine Ölwanne hinter dem zweiten Rad des ersten Radpaares. Im Falle einer aus dem Stand der Technik bekannten Koaxialität der ersten Drehachse und der zweiten Drehachse stehen der Hauptriemen und die Ölwanne einer Erhöhung des Durchmessers der Räder des ersten Radpaares entgegen. Durch die Versetzung der Drehachsen zueinander in die Fahrtrichtung können nun die Durchmesser der Räder erhöht werden, ohne die Ölwanne verkleinern zu müssen oder den Hauptriemen gesondert umlenken zu müssen.

In einem weiteren Beispiel ist vor dem ersten Rad eine Koppeleinrichtung zur Verbindung einer Antriebswelle mit einem Erntevorsatz angeordnet und ist gegenüberliegend hinter dem zweiten Rad ein Wartungszugang zur Wartung des Ernteaggregats angeordnet. In diesem Fall lassen sich wiederum durch die Versetzung der Drehachsen relativ zueinander in die Fahrtrichtung die Durchmesser der Räder vergrößern, ohne dass eine Umkonstruktion der Koppeleinrichtung oder gar eine Verkleinerung des Erntegutkanals oder eine Beengung des Wartungszugangs erforderlich ist.

Neben den genannten Bauraumvorteilen bietet die erfindungsgemäße Ausbildung der Erntemaschine gar weitere Vorteile. Unabhängig davon, ob das erste Radpaar ein lenkbares Radpaar ist oder nicht, lassen sich durch die erfindungsgemäße Ausbildung zumindest in eine Lenkrichtung kleinere Kurvenradien erreichen. Bei der Überfahrt von Querrillen, wie zum Beispiel Furchen an Feldrändern, ist die Belastung der Erntemaschine durch das zeitversetzte Eintauchen der Räder in die Querrille verringert. Bei höheren Fahrgeschwindigkeiten ist die Neigung der Erntemaschine zu Nickbewegungen verringert und die Neigung der Erntemaschine zum Abrutschen bei Betrieb an einem Hang ist verringert.

Vorzugsweise ist das Fahrwerk derart ausgebildet, dass die erste Drehachse zumindest in der Geradeausstellung des ersten Radpaares relativ zur zweiten Drehachse um zumindest 10 mm, bevorzugt um zumindest 30 mm, besonders bevorzugt um zumindest 50 mm in die Fahrtrichtung versetzt angeordnet ist. Alternativ oder zusätzlich ist die erste Drehachse in der Geradeausstellung vorzugsweise um zumindest 1 %, bevorzugt um zumindest 3 %, besonders bevorzugt um zumindest 5 % des Durchmessers des ersten Rades in die Fahrtrichtung versetzt angeordnet. Durch diesen Mindestversatz lassen sich die vorbeschriebenen Vorteile zu erheblichen Ausmaßen erreichen. Mit Vorteil ist die erste Drehachse zumindest in der Geradeausstellung relativ zur zweiten Drehachse um höchstens 500 mm, bevorzugt höchstens 300 mm, bzw. um höchstens 50 % des Durchmessers, bevorzugt höchstens 30 % des Durchmessers, des ersten Rades relativ zur zweiten Drehachse versetzt angeordnet. Durch diese Obergrenzen lassen sich bei typischen Erntemaschinenaufbauten unverhältnismäßige Aufwände für die konstruktive Verwirklichung des Drehachsenversatzes vermeiden.

Bevorzugt weist die Erntemaschine, insbesondere das Fahrwerk, eine Lenkeinrichtung zur Überführung des ersten Radpaares von der Geradeausstellung in eine Kurvenstellung auf. In der Kurvenstellung sind die erste Drehachse und die zweite Drehachse um weniger als 90° zur Längsmittelebene angewinkelt. Es handelt sich bei dem ersten Radpaar also um ein zu lenkendes bzw. gelenktes Radpaar. Die Lenkeinrichtung ist bevorzugt als Achsschenkellenkung ausgebildet. Durch die Realisierung des Drehachsenversatzes an einem zu lenkenden bzw. gelenkten Radpaar ist die Wendigkeit der Erntemaschine in einem besonderen Ausmaß zu erhöhen. Insbesondere lassen sich die maximalen Lenkwinkel des ersten Rades und des zweiten Rades des ersten Radpaares vergrößern oder die Radbreiten bei Beibehaltung des Lenkwinkels vergrößern. Durch die größere Wendigkeit ist der Acker entlang einer kürzeren Route und damit bodenschonender abzuarbeiten.

Sich ergebende unterschiedliche Wendekreise je nach Lenkrichtung können bei einer Fahrtroutenplanung berücksichtigt werden.

In einer vorteilhaften Ausgestaltung der Erfindung ist die Lenkeinrichtung derart ausgebildet, dass die erste Drehachse und die zweite Drehachse eine weitere Drehachse eines weiteren Rades des Fahrwerkes in der zumindest einen Kurvenstellung des ersten Radpaares zumindest in einer Draufsicht im selben Schnittpunkt schneiden. Besonders bevorzugt schneiden die erste Drehachse und die zweite Drehachse die weitere Drehachse in jeder einzunehmenden Kurvenstellung im selben Schnittpunkt. Insbesondere in dem Fall, dass sämtliche Räder denselben Durchmesser haben und die Drehachsen immer parallel zur Bodenebene bleiben, gilt dies nicht nur für die Draufsicht. Bei dem beschriebenen Schnittpunkt der Drehachsen handelt es sich insbesondere um den Momentanpol der gelenkten Erntemaschine. Durch diese Ausbildung der Lenkeinrichtung berücksichtigt sie den Drehachsenversatz derart, dass trotz des Drehachsenversatzes keine zusätzlichen Spannungen im Maschinenrahmen oder Schlupf- bzw. Reibbewegungen zwischen zumindest einem der Räder und dem Acker auftreten. Auf diese Weise ist insbesondere bei einem Betrieb der Erntemaschine auf Grünland ein entscheidender Vorteil in Bezug auf die Bodenschonung zu erreichen.

Die Lenkeinrichtung und/oder das Fahrwerk weisen/weist pro Rad bevorzugt einen Radträger, an dem das jeweilige Rad drehbar gelagert ist, einen Querlenker, an dem der jeweilige Radträger gelagert ist und/oder eine Spurstange, die an dem jeweiligen Radträger gelagert ist, auf. Bevorzugt ist ein zweiter Radträger derart ausgebildet, dass in der Geradeausstellung eine Spiegelung seiner Form an der Längsmittelebene von der Form eines ersten Radträgers abweicht. Das bedeutet, dass die Radträger auch bei Berücksichtigung ihrer gespiegelten Anordnung und Funktion unterschiedlich ausgebildet sind, insbesondere um den Versatz der Drehachsen zur realisieren. Bei den Radträgern handelt es sich insbesondere um sogenannte Achsschenkel. An den Rad-trägern ist insbesondere eine um die jeweilige Drehachse drehbare Radnabe, an der das jeweilige Rad zu fixieren ist, angeordnet, die auch vom Radträger unmittelbar umfasst sein kann. Die voneinander abweichenden Formen der Radträger ermöglichen eine zumindest weitgehende Beibehaltung der darüber hinausgehenden Komponenten des Fahrwerkes bzw. der Lenkeinrichtung.

Alternativ oder zusätzlich zum Vorstehenden ist der zweite Radträger derart angeordnet, dass in der Geradeausstellung seine Spiegelung an der Längsmittelebene relativ zum ersten Radträger zumindest anteilig in die Fahrtrichtung versetzt ist. In diesem Fall sind die Radträger insbesondere abgesehen von ihrer gespiegelten Anordnung und Funktion formgleich, das heißt insbesondere abgesehen von ihrer Anordnung gespiegelt ausgebildet aus. Durch diese Anordnung der Radträger lässt sich ihre zuverlässige Form bei der Umsetzung des Drehachsenversatzes beibehalten.

Vorzugsweise ist ein zweiter Querlenker derart ausgebildet, dass in der Geradeausstellung eine Spiegelung der Form des zweiten Querlenkers an der Längsmittelebene von der Form eines ersten Querlenkers abweicht. In diesem Fall haben die Querlenker auch bei Berücksichtigung ihrer spiegelverkehrten Anordnung und Funktion unterschiedliche Formen. Hierdurch ist die in die Fahrtrichtung versetzte Anordnung der Radträger besonders einfach zu realisieren.

Alternativ oder zusätzlich ist der zweite Querlenker derart angeordnet, dass in der Geradeausstellung eine Spiegelung des zweiten Querlenkers an der Längsmittelebene relativ zum ersten Querlenker zumindest anteilig in die Fahrtrichtung versetzt ist. Hierdurch kann es sich bei den Querlenkern, abgesehen von der grundsätzlich gespiegelten Ausbildung, um Gleichteile handeln, wodurch der Aufbau des Fahrwerkes bzw. der Lenkeinrichtung wiederum vereinfacht ist. Vorzugsweise weicht eine Spiegelung der Form und/oder Anordnung einer zweiten Spurstange an der Längsmittelebene in der Geradeausstellung von der Form bzw. Anordnung einer ersten Spurstange ab. Das bedeutet insbesondere, dass die funktional gleichen Lagerpunkte der Spurstangen in die Fahrtrichtung versetzt zueinander positioniert sind. Auf diese Weise lässt sich insbesondere der Verlauf sämtlicher Drehachsen durch denselben Schnittpunkt einfach realisieren.

Die Lenkeinrichtung umfasst vorzugsweise einen Lenkaktor zur Bewegung zumindest einer der Spurstangen, insbesondere beider Spurstangen, in eine Lenkrichtung, die um weniger als 90° angewinkelt zur Längsmittelebene ausgerichtet ist. Der Lenkaktor umfasst insbesondere einen Hydraulikzylinder, insbesondere einen Gleichgangzylinder, der im Gegensatz zum Stand der Technik nicht in die Querrichtung, sondern leicht angewinkelt dazu wirkt. Dies vereinfacht wiederum den Aufbau der Lenkeinrichtung zur Erreichung der vorbeschriebenen Funktionen.

Das Fahrwerk weist bevorzugt zumindest ein zweites Radpaar auf. Das zweite Radpaar ist aus einem ersten Rad, das drehbar um eine erste Drehachse gelagert ist, und einem zweiten Rad gebildet, das drehbar um eine zweite Drehachse gelagert ist. Das zweite Rad ist dem ersten Rad bezogen auf die Längsmittelebene zumindest teilweise gegenüberliegend angeordnet. Die erste Drehachse und die zweite Drehachse des zweiten Radpaares sind in einer Geradeausstellung des zweiten Radpaares jeweils im Wesentlichen rechtwinklig zur Längsmittelebene ausgerichtet. Das vorgenannte weitere Rad ist insbesondere das erste oder zweite Rad des zweiten Radpaares. Das zweite Radpaar ist dem ersten Radpaar bevorzugt in die Fahrtrichtung vor- oder nachgeordnet. Konkret heißt das insbesondere, dass das erste Rad des ersten Radpaares dem ersten Rad des zweiten Radpaares und/oder das zweite Rad des ersten Radpaares dem zweiten Rad des zweiten Radpaares bezogen auf die Fahrtrichtung vor- oder nachgeordnet ist. Die Durchmesser der Räder des zweiten Radpaares sind bevorzugt größer oder kleiner als die Durchmesser der Räder des ersten Radpaares. Alternativ dazu haben sämtliche Räder denselben Durchmesser. Durch das zweite Radpaar handelt es sich bei dem Fahrwerk um ein bewährtes, zumindest vierrädriges Radfahrwerk. Die beiden in die Fahrtrichtung am weitesten voneinander entfernten Drehachsen des ersten und des zweiten Radpaares sind bevorzugt weniger als 4 m voneinander entfernt.

Vorzugsweise ist das Fahrwerk derart ausgebildet, dass die erste Drehachse des zweiten Radpaares zumindest in seiner Geradeausstellung relativ zur zweiten Drehachse des zweiten Radpaares in die Fahrtrichtung versetzt angeordnet ist. Insbesondere sind sämtliche der vorbeschriebenen fakultativen und auf das erste Radpaar bezogenen Merkmale auch als auf das zweite Radpaar bezogen zu verstehen. Die Realisierung des erfindungswesentlichen Drehachsenversatzes auch bei dem zweiten Radpaar führt dazu, dass die beschriebenen Vorteile sich potenzieren lassen. Beispielsweise können beide exemplarisch im Detail beschriebenen Vorteile in derselben Erntemaschine realisiert sein.

Bevorzugt weist das Fahrwerk zumindest ein drittes Radpaar auf. Das dritte Radpaar ist aus einem ersten Rad, das drehbar um eine erste Drehachse gelagert ist, und aus einem zweiten Rad gebildet, das drehbar um eine zweite Drehachse gelagert ist. Das zweite Rad ist dem ersten Rad bezogen auf die Längsmittelebene zumindest teilweise gegenüberliegenden angeordnet. Die erste Drehachse und die zweite Drehachse des dritten Radpaares sind in einer Geradeausstellung dessen jeweils im Wesentlichen rechtwinklig zur Längsmittelebene ausgerichtet. Das dritte Radpaar ist bevorzugt zwischen dem ersten Radpaar und dem zweiten Radpaar angeordnet, wobei die drei Radpaare auch in anderer Anordnung zu realisieren sind. Auch für das dritte Radpaar gilt, dass sämtliche der vorbeschriebenen fakultativen und auf das erste oder zweite Radpaar bezogenen Merkmale auch als auf das zweite Radpaar bezogen zu verstehen sind. Durch das dritte Radpaar lässt sich die Bodenschonung erheblich verbessern und auch bei größeren Eigen- oder Einsatzgewichten der Erntemaschine in einem akzeptablen Rahmen halten.

In einer vorteilhaften Ausgestaltung der Erfindung ist eines der genannten Radpaare, insbesondere das zweite Radpaar, an einem Achskörper gelagert. Das bedeutet, dass das erste Rad und das zweite Rad des Radpaares an dem Achskörper gelagert sind. Der Achskörper weist einen die Längsmittelebene schneidenden Querabschnitt, der sich insbesondere länglich in die Querrichtung erstreckt, auf. Bevorzugt weist der Achskörper ferner zumindest ein sich in einer Draufsicht vom Querabschnitt in die Fahrtrichtung erstreckendes, erstes Radträgerende auf, an dem das erste Rad drehbar gelagert ist. Besonders bevorzugt weist der Achskörper ein zweites, sich in der Draufsicht vom Querabschnitt in die Fahrtrichtung erstreckendes Radträgerende auf, an dem das zweite Rad drehbar gelagert ist. Das zweite Radträgerende erstreckt sich in der Draufsicht insbesondere weiter als das erste Radträgerende vom Querabschnitt in die Fahrtrichtung. In diesem Fall sind das erste und das zweite Rad besonders bevorzugt Vorderräder der Erntemaschine. Durch den beschriebenen Achskörper lassen sich die vorbeschriebenen Vorteile erreichen, ohne dafür den üblicherweise zentral angeordneten Förderkanal für das Erntegut einschränken zu müssen.

In einer vorteilhaften Ausgestaltung der Erfindung umfasst die Erntemaschine den insbesondere beweglich mit dem Maschinenrahmen verbundenen Erntevorsatz. Der Erntevorsatz weist zumindest ein drehbar um eine Drehachse gelagertes Stützrad auf, das zumindest in einer Transportstellung des Erntevorsatzes an die Bodenebene angrenzt und dem zumindest einen Radpaar des Fahrwerkes bezogen auf die Fahrtrichtung vorgeordnet ist. Der Erntevorsatz ist insbesondere lösbar mit dem Maschinenrahmen verbunden und kann je nach zu erntender Pflanzengattung ausgetauscht werden. Durch das Stützrad ist die Bodenschonung weiter zu verbessern.

Weitere Einzelheiten und Vorteile der Erfindung sind den nachfolgend beschriebenen, schematisch dargestellten Figuren zu entnehmen; es zeigen:
- Fig. 1: eine vereinfacht dargestellte Seitenansicht einer ersten erfindungsgemäßen Erntemaschine,
- Fig. 2: eine vereinfacht dargestellte Seitenansicht einer zweiten erfindungsgemäßen Erntemaschine,
- Fig. 3: eine schematisch dargestellte Draufsicht auf das Fahrwerk einer ersten Erntemaschine gemäß dem Stand der Technik,
- Fig. 4: eine schematisch dargestellte Draufsicht auf das Fahrwerk der ersten erfindungsgemäßen Erntemaschine mit einem ersten Radpaar in einer Geradeausstellung,
- Fig. 5: eine schematisch dargestellte Draufsicht auf das Fahrwerk der ersten erfindungsgemäßen Erntemaschine mit dem ersten Radpaar in einer Kurvenstellung,
- Fig. 6: eine schematisch dargestellte Draufsicht auf das Fahrwerk einer dritten erfindungsgemäßen Erntemaschine,
- Fig. 7: eine schematisch dargestellte Draufsicht auf das Fahrwerk der zweiten erfindungsgemäßen Erntemaschine,
- Fig. 8: eine schematisch dargestellte Draufsicht auf das Fahrwerk einer vierten erfindungsgemäßen Erntemaschine,
- Fig. 9: eine schematisch dargestellte Draufsicht auf das Fahrwerk einer fünften erfindungsgemäßen Erntemaschine,
- Fig. 10: eine schematisch dargestellte Draufsicht auf das Fahrwerk einer sechsten erfindungsgemäßen Erntemaschine,
- Fig. 11: einen vereinfachten Horizontalschnitt der ersten Erntemaschine gemäß dem Stand der Technik,
- Fig. 12: einen vereinfachten Horizontalschnitt einer siebten erfindungsgemäßen Erntemaschine,
- Fig. 13: einen vereinfachten Horizontalschnitt einer achten erfindungsgemäßen Erntemaschine,
- Fig. 14: einen vereinfachten Horizontalschnitt einer neunten erfindungsgemäßen Erntemaschine,
- Fig. 15: einen vereinfachten Horizontalschnitt einer zehnten erfindungsgemäßen Erntemaschine,
- Fig. 16: einen vereinfachten Horizontalschnitt einer zweiten Erntemaschine gemäß dem Stand der Technik,
- Fig. 17: einen vereinfachten Horizontalschnitt einer elften erfindungsgemäßen Erntemaschine,
- Fig. 18: einen vereinfachten Horizontalschnitt einer zwölften erfindungsgemäßen Erntemaschine,
- Fig. 19: einen vereinfachten Horizontalschnitt einer dreizehnten erfindungsgemäßen Erntemaschine,
- Fig. 20: einen vereinfachten Horizontalschnitt einer vierzehnten erfindungsgemäßen Erntemaschine,
- Fig. 21: einen vereinfachten Horizontalschnitt einer fünfzehnten erfindungsgemäßen Erntemaschine und
- Fig. 22: eine schematisch dargestellte Draufsicht auf das Fahrwerk einer sechzehnten erfindungsgemäßen Erntemaschine.

Die nachfolgend beschriebenen Merkmale der erfindungsgemäßen Ausführungsbeispiele sind auch in anderen Kombinationen als dargestellt Gegenstand der Erfindung. Funktional gleichwirkende Komponenten der erfindungsgemäßen Erntemaschinen sind, sofern sinnvoll, mit identischen Bezugszeichen versehen. Der Übersichtlichkeit halber sind pro Fig. nur die zum Verständnis zentralen Komponenten mit Bezugszeichen versehen.

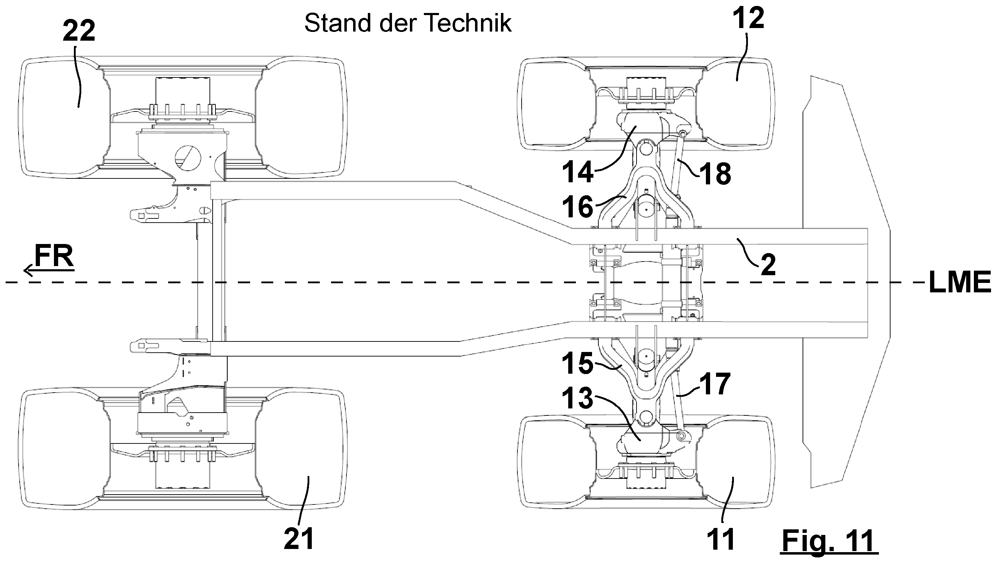

Die Figuren zeigen insgesamt 16 unterschiedliche Erntemaschinen 1, die jeweils als Feldhäcksler ausgebildet sind, in unterschiedlichen Darstellungen. Die Erntemaschinen 1 weisen jeweils eine nicht dargestellte Arbeitsmaschine und ein nicht dargestelltes Ernteaggregat auf. Außerdem weisen die Erntemaschinen 1 jeweils einen Maschinenrahmen 2 auf, wovon ein in Fahrtrichtung FR hinterer Teil, wie in den Fig. 11 ff. sichtbar ist, spiegelsymmetrisch zu einer Längsmittelebene LME ausgebildet ist, die den Maschinenrahmen in zwei Rahmenhälften unterteilt.

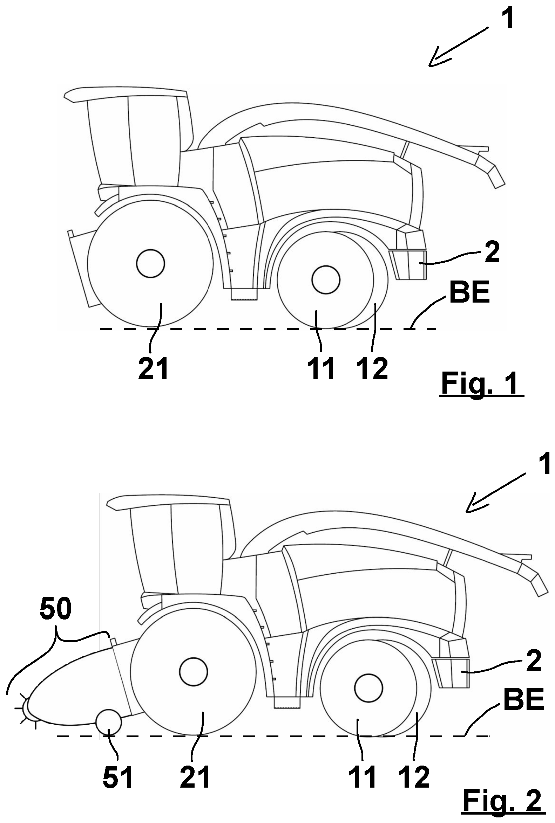

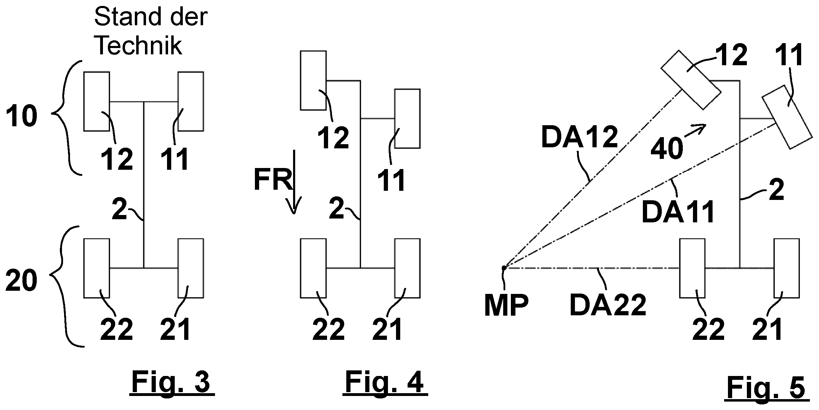

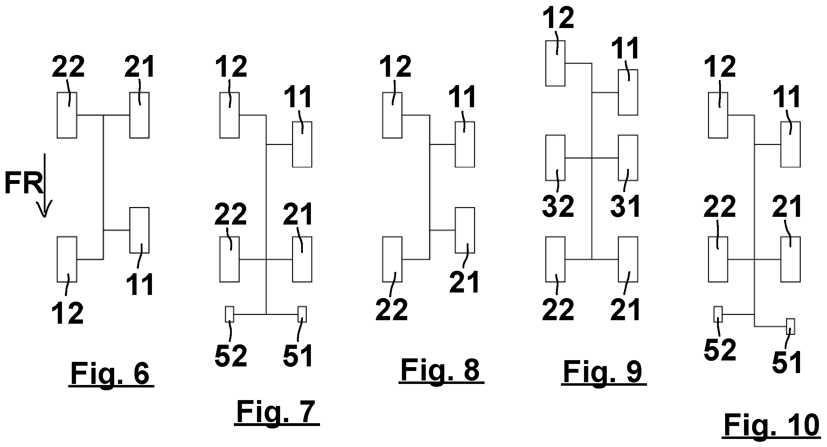

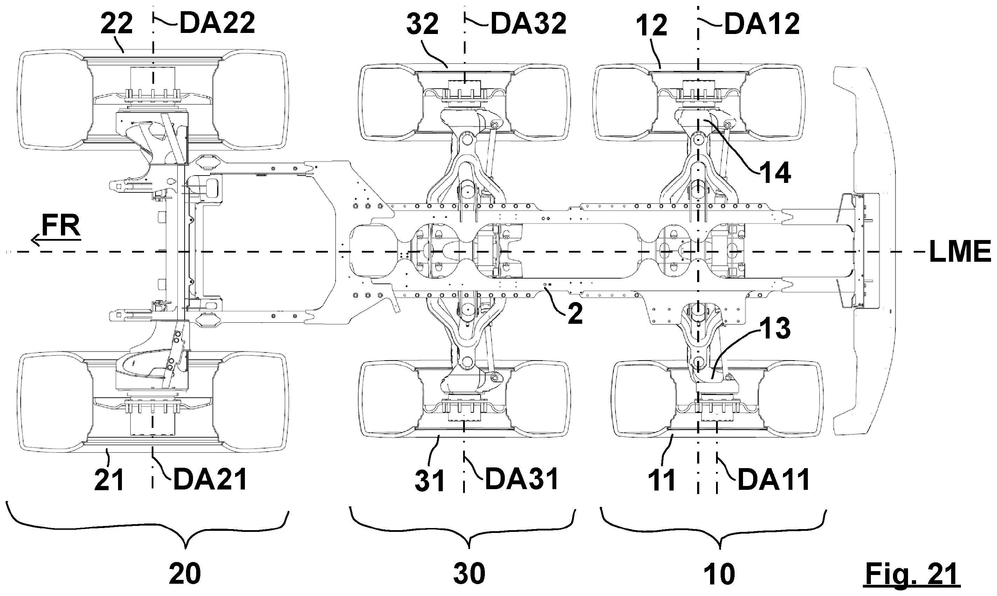

Die Erntemaschinen 1 weisen jeweils ein Fahrwerk auf, das zumindest ein erstes Radpaar 10 und ein zweites Radpaar 20 umfasst. Das Fahrwerk ist jeweils zur Fortbewegung der Erntemaschine 1 in eine zur Längsmittelebene LME parallele Fahrtrichtung FR ausgebildet. Das erste Radpaar 10 weist ein erstes Rad 11, das drehbar um eine erste Drehachse DA11 gelagert ist, und ein zweites Rad 12, das drehbar um eine zweite Drehachse DA12 gelagert ist, auf. Das zweite Radpaar 20 umfasst ein erstes Rad 21, das drehbar um eine erste Drehachse DA21 gelagert ist, und ein zweites Rad 22, das drehbar um eine zweite Drehachse DA22 gelagert ist. Die Fahrwerke der Erntemaschinen 1 gemäß den Fig. 9 und 21 umfassen ein drittes Radpaar 30, das aus einem ersten Rad 31, das drehbar um eine erste Drehachse DA31 gelagert ist, und einem zweiten Rad 32 gebildet ist, das drehbar um eine zweite Drehachse DA32 gelagert ist. Die Räder 11, 12, 21, 22, 31, 32 desselben Radpaares 10, 20, 30 liegen einander bezogen auf die Längsmittelebene LME derart zumindest teilweise gegenüber, dass ihre Drehachse DA11, DA12, DA21, DA22, DA31, DA32 das jeweils andere Rad 11, 12, 21, 22, 31, 32 jeweils schneidet oder sich durch eine Öffnung des jeweiligen Rades 11, 12, 21, 22, 31, 32 erstreckt. Mit Ausnahme von Fig. 5 zeigen sämtliche Figuren die Radpaare 10, 20, 30 der jeweiligen Erntemaschine 1 in einer Geradeausstellung, in der sämtliche Drehachsen DA11, DA12, DA21, DA22, DA31, DA32 rechtwinklig zur Längsmittelebene LME ausgerichtet sind. Die Erntemaschine 1 grenzt jeweils mit den genannten Rädern 11, 12, 21, 22, 31, 32 an eine zur Längsmittelebene LME rechtwinklige Bodenebene BE an (siehe Fig. 1 f.).

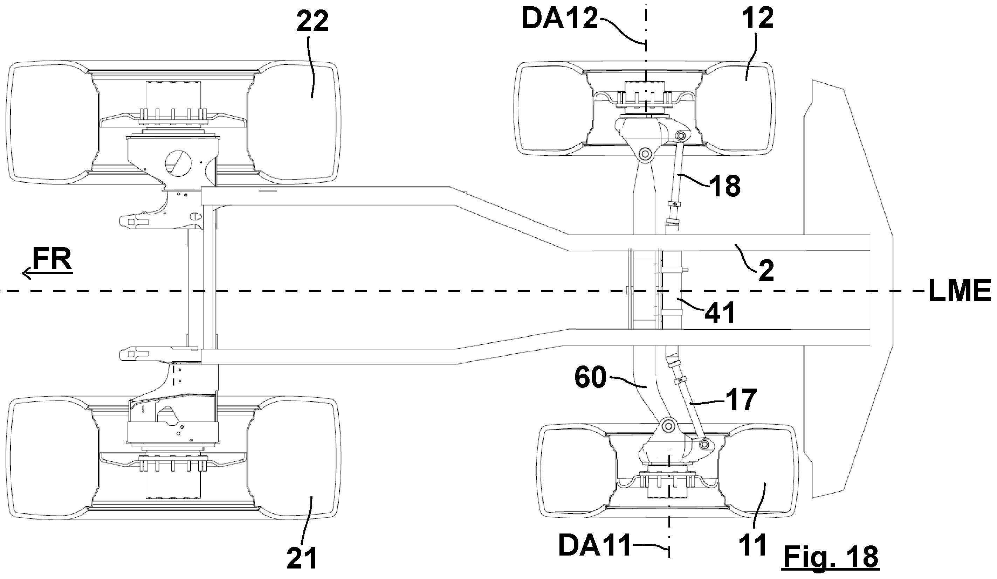

Die erfindungsgemäßen Erntemaschinen 1 zeichnen sich dadurch aus, dass die erste Drehachse DA11, um die das erstes Rad 11 des ersten Radpaares 10 drehbar gelagert ist, zumindest in der Geradeausstellung des ersten Radpaares 10 relativ zur zweiten Drehachse DA12, um die das zweite Rad 12 des ersten Radpaares 10 drehbar gelagert ist, in die Fahrtrichtung FR versetzt angeordnet ist. Bei dem ersten Radpaar 10 handelt es sich je nach erfindungsgemäßer Erntemaschine 1 um ein Paar von Vorderrädern (Fig. 6, 20 und 22) oder um ein Paar von Hinterrädern (Fig. 1, 2, 4, 5, 7 - 10, 12 - 15, 17 - 19, 21). Gemäß Fig. 8 ist auch die erste Drehachse DA21 des zweiten Radpaares 20 zumindest in seiner Geradeausstellung relativ zur zweiten Drehachse DA22 des zweiten Radpaares 20 in die Fahrtrichtung FR versetzt angeordnet.

Die Erntemaschinen 1 gemäß den Fig. 2, 7 und 10 weisen einen Erntevorsatz 50 auf. Der Erntevorsatz 50 umfasst ein erstes Stützrad 51 und ein zweites Stützrad 52, die ebenso wie die weiteren Räder 11, 12, 21, 22, 31, 32 die Bodenebene BE berühren.

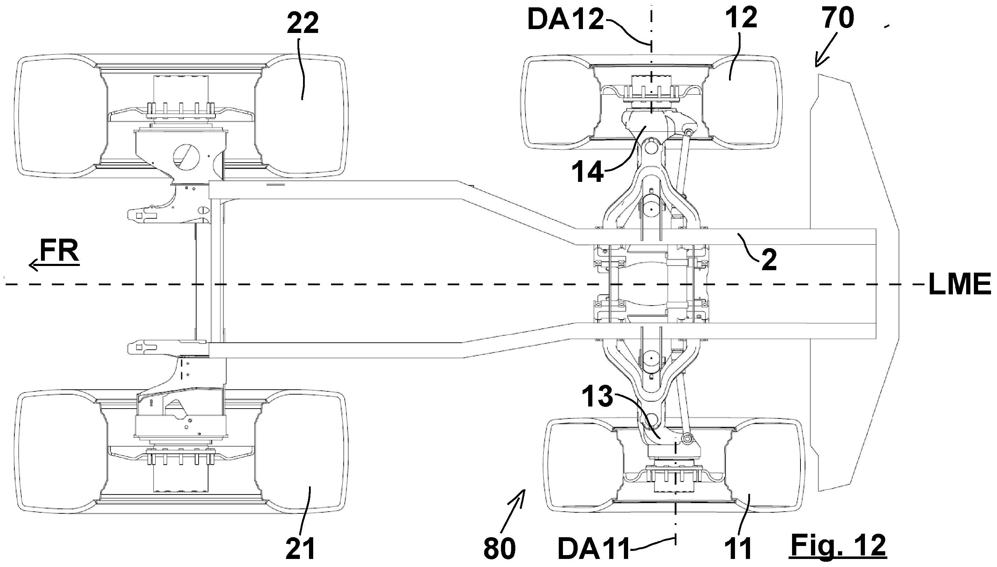

Bei den Erntemaschinen 1 gemäß den Fig. 12 - 15, 17 - 19 und 21 sind die Räder 11, 12, die hier Hinterräder bilden, des ersten Radpaares 10 derart zueinander versetzt, dass die Drehachse DA11 des in Fahrtrichtung FR betrachtet links angeordneten ersten Rades 11 in Fahrtrichtung FR hinter der Drehachse DA12 des in Fahrtrichtung FR betrachtet rechts angeordneten zweiten Rades 12 angeordnet ist. Durch diesen Versatz der genannten Drehachsen DA11 und DA12 wird zum einen ein Bauraumvorteil vor dem ersten Rad 11 geschaffen, wo üblicherweise ein Hauptriemen 80 (exemplarisch in Fig. 12 kenntlich gemacht) verläuft. Durch den Versatz der genannten Drehachsen DA11 und DA12 wird zum anderen ein Bauraumvorteil hinter dem zweiten Rad 12 geschaffen, wo sich üblicherweise eine Ölwanne 70 (exemplarisch in Fig. 12 kenntlich gemacht) erstreckt.

Bei den Erntemaschinen 1 gemäß den Fig. 1, 2, 4, 5, 7 - 10, 12 - 15, 17 - 19 und 21 ist das erste Radpaar 10 jeweils mit einer Lenkeinrichtung 40 versehen (exemplarisch in Fig. 5 kenntlich gemacht). Die Lenkeinrichtung 40 ist derart ausgebildet, dass sämtliche Drehachsen DA11, DA12, DA21, DA22, DA31, DA32 in der Kurvenstellung des ersten Radpaares 10, das heißt in einer Kurvenfahrt der Erntemaschine 1, in der Draufsicht gemäß Fig. 5 durch denselben Schnittpunkt MP verlaufen. Dies lässt sich im Detail folgendermaßen erreichen.

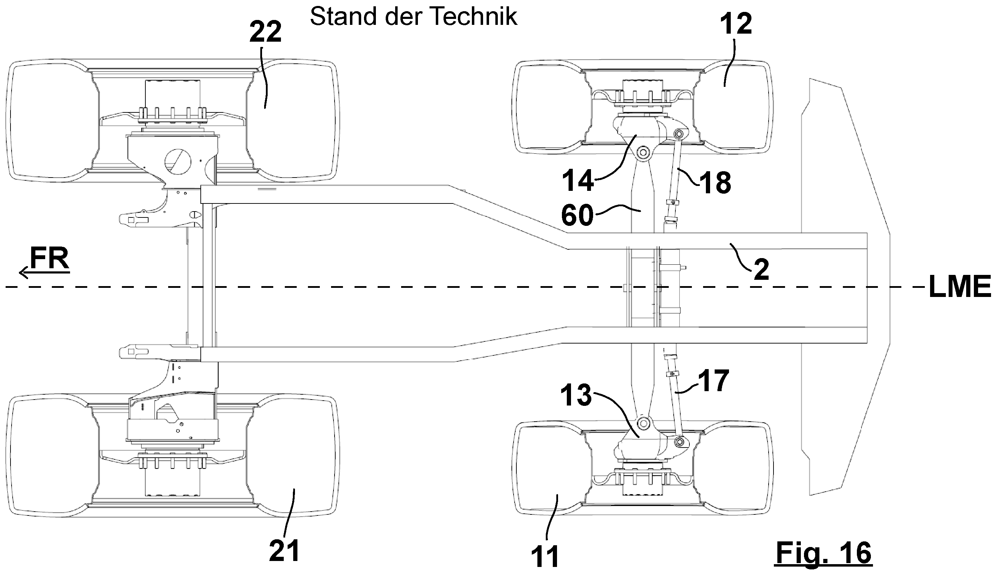

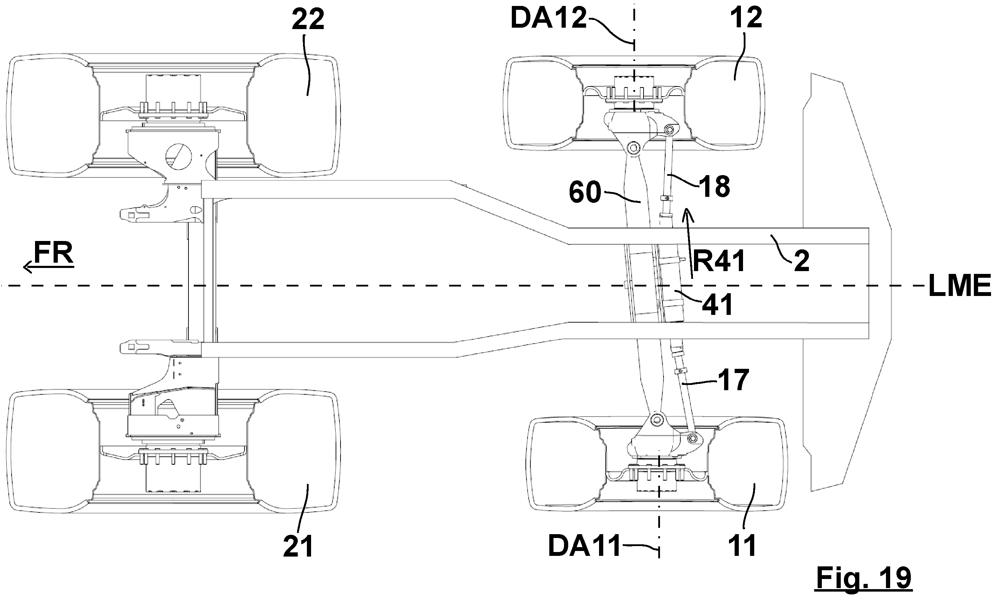

Die Räder 11, 12 des ersten Radpaares 10 der Erntemaschinen 1 gemäß den Fig. 16 - 19 sind mittels eines Achskörpers 60, der als Starrachse ausgebildet ist und von der Längsmittelebene LME geschnitten wird, aufgehängt. Im Gegensatz dazu sind die Räder 11, 12 des ersten Radpaares 10 der Erntemaschinen 1 gemäß den Fig. 11 - 15 mittels Querlenkern 15, 16 aufgehängt, wodurch eine Einzelradaufhängung realisiert ist. Unabhängig vom Vorhandensein der Starrachse oder der Einzelradaufhängung ist pro Rad 11, 12 ein Radträger 13, 14 und eine Spurstange 17, 18 vorhanden, wobei die Spurstangen 17, 18 an einem Lenkaktor 41 angeordnet und dadurch in eine Längsrichtung R41 beweglich sind (sh. insbesondere Fig. 19).

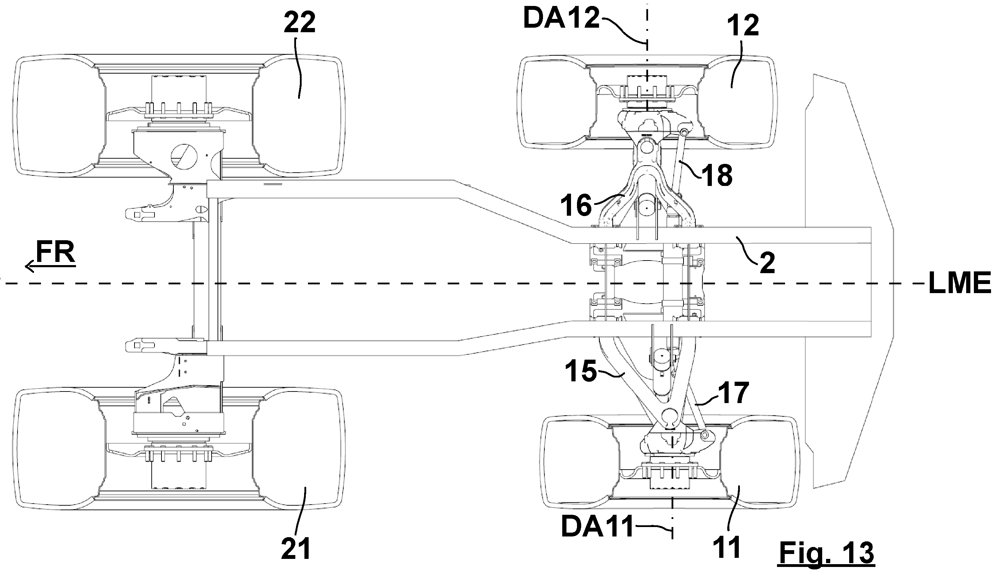

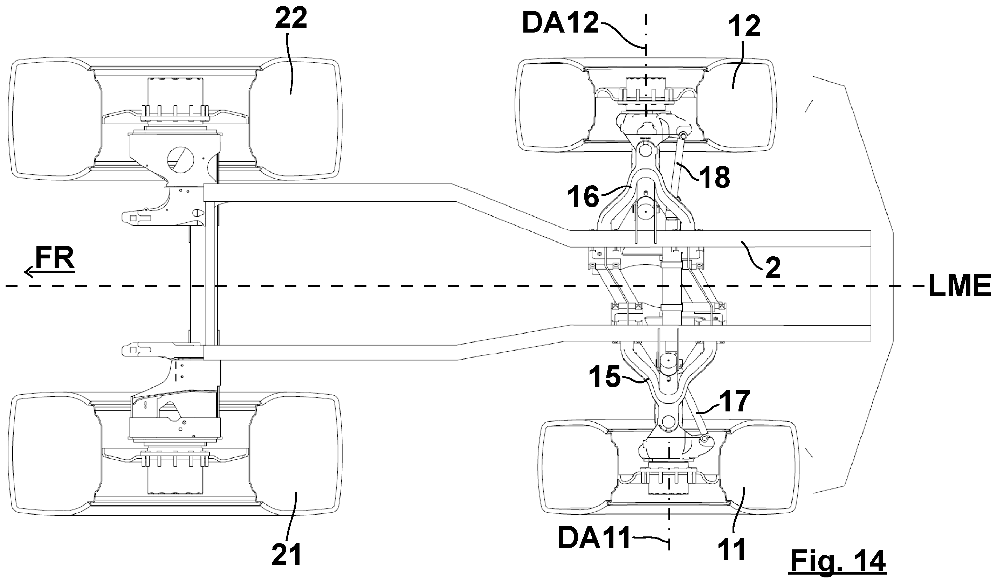

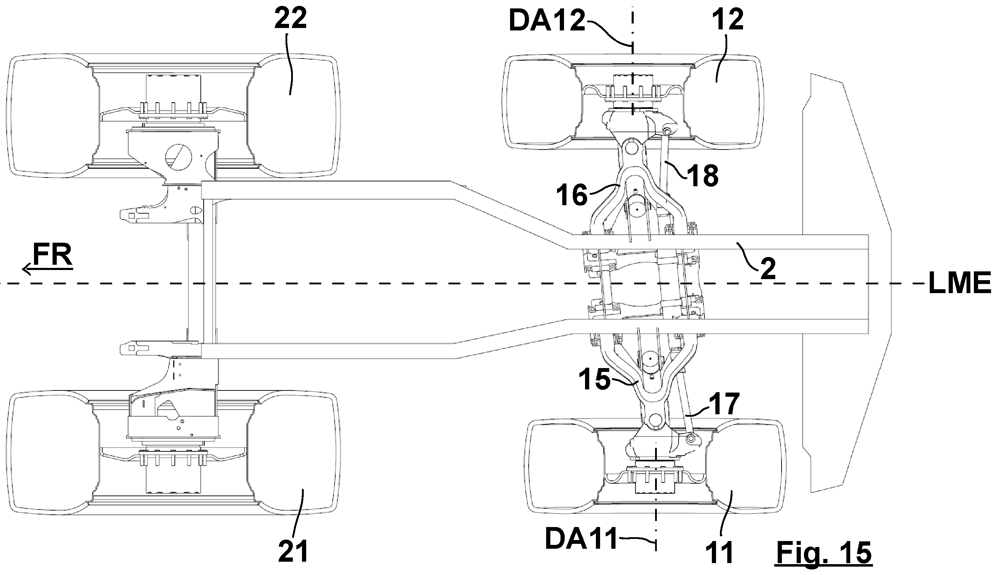

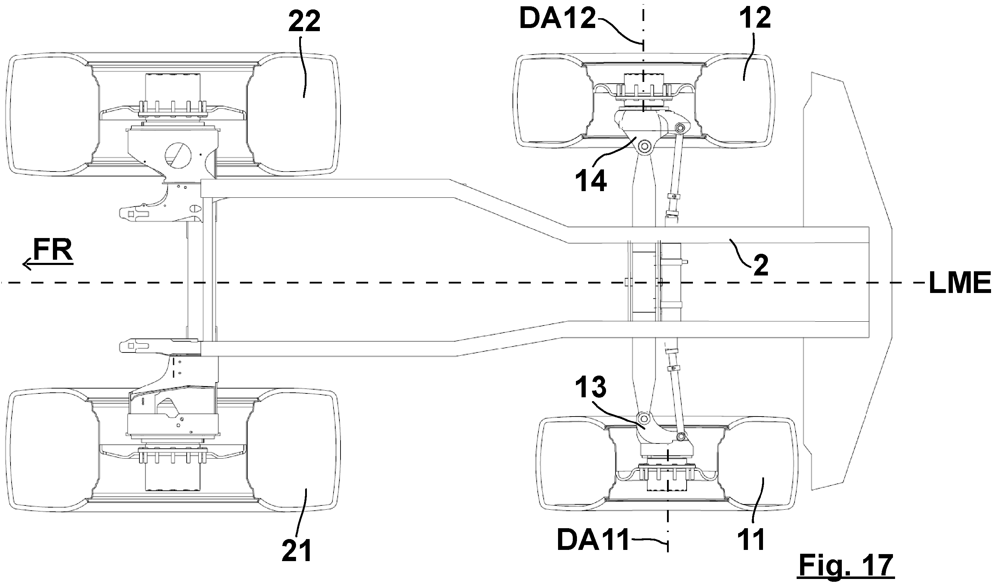

Gemäß Fig. 12 ist der zweite Radträger 14 derart ausgebildet, dass eine Spiegelung seiner Form an der Längsmittelebene LME von der Form des ersten Radträgers 13 abweicht. Dasselbe gilt für die Fig. 17 und 21. Gemäß den Fig. 13, 14, 15, 18 und 19 sind die Radträger 13, 14 zwar spiegelsymmetrisch ausgebildet, jedoch anteilig in die Fahrtrichtung FR versetzt zueinander angeordnet. Gemäß den Fig. 13 und 15 sind die Querlenker 15, 16 derart ausgebildet, dass eine Spiegelung der Form des zweiten Querlenkers 16 an der Längsmittelebene LME von der Form des ersten Querlenkers 15 abweicht. Gemäß Fig. 14 ist eine Spiegelung des zweiten Querlenkers 16 an der Längsmittelebene LME relativ zum ersten Querlenker 15 zumindest anteilig in die Fahrtrichtung FR versetzt angeordnet. Gemäß den Fig. 13, 14, 15, 18 und 19 sind die Spurstangen 17, 18 derart angeordnet, dass eine Spiegelung der Form und/oder Anordnung der zweiten Spurstange 18 an der Längsmittelebene LME in der Geradeausstellung von der Form bzw. Anordnung der ersten Spurstange 17 abweicht. Gemäß den Fig. 15 und 19 ist der Lenkaktor 41 derart angeordnet, dass die Lenkrichtung R41 um weniger als 90° zur Längsmittelebene LME angewinkelt ausgerichtet ist.

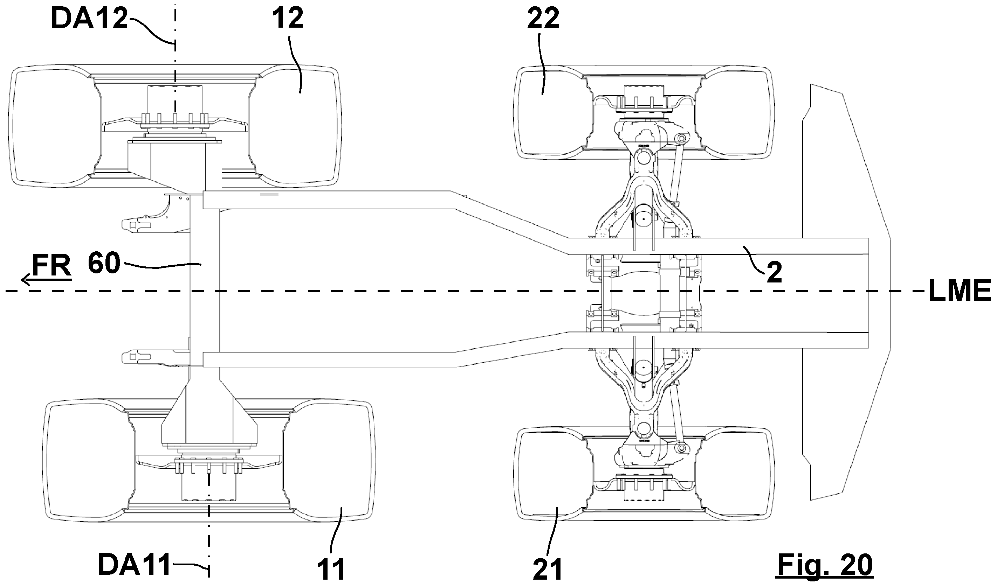

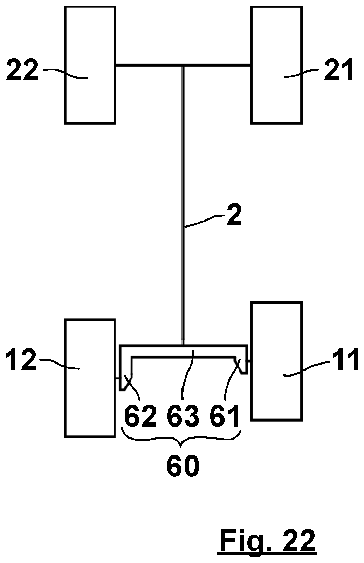

Gemäß den Fig. 20 und 22 handelt es sich bei den Rädern 11, 12 des ersten Radpaares 10 um Vorderräder. Die Räder 11 und 12 sind hier an einem asymmetrisch ausgebildeten Achskörper 60 angeordnet. Der Achskörper 60 der Erntemaschine 1 gemäß Fig. 22 setzt sich aus einem von der Längsmittelebene LME geschnittenen Querabschnitt 63, einem ersten Radträgerende 61, an dem das erste Rad 11 drehbar gelagert ist, und einem zweiten Radträgerende 62 zusammen, an dem das zweite Rad 12 drehbar gelagert ist. Dabei erstreckt sich das zweite Radträgerende 62 weiter in die Fahrtrichtung FR von dem Querabschnitt 63 weg als das erste Radträgerende 61.

## Patentansprüche

1. Selbstfahrende landwirtschaftliche Erntemaschine (1), aufweisend
- eine Arbeitsmaschine zum Antreiben der Erntemaschine (1),
- ein Ernteaggregat zur Einwirkung auf landwirtschaftliches Erntegut,
- einen Maschinenrahmen (2), der von einer Längsmittelebene (LME) in zwei Rahmenhälften unterteilt wird, und
- ein Fahrwerk,
∘ mit dem die Erntemaschine (1) an eine zur Längsmittelebene (LME) rechtwinklig ausgerichtete Bodenebene (BE) angrenzt,
∘ das zur Fortbewegung des Erntemaschine (1) in eine zur Längsmittelebene (LME) parallele Fahrtrichtung (FR) ausgebildet ist und
∘ das zumindest ein erstes Radpaar (10) aufweist, das aus
▪ einem ersten Rad (11), das drehbar um eine erste Drehachse (DA11) gelagert ist, und
▪ einem zweiten Rad (12) gebildet ist, das drehbar um eine zweite Drehachse (DA12) gelagert ist und dem ersten Rad (11) bezogen auf die Längsmittelebene (LME) zumindest teilweise gegenüberliegend angeordnet ist,
wobei die erste Drehachse (DA11) und die zweite Drehachse (DA12) in einer Geradeausstellung des ersten Radpaares (10) jeweils im Wesentlichen rechtwinklig zur Längsmittelebene (LME) ausgerichtet sind,
**gekennzeichnet durch** eine derartige Ausbildung des Fahrwerkes, dass die erste Drehachse (DA11) zumindest in der Geradeausstellung des ersten Radpaares (10) relativ zur zweiten Drehachse (DA12) in die Fahrrichtung (FR) versetzt angeordnet ist.

2. Erntemaschine (1) nach Anspruch 1,
**gekennzeichnet durch** eine Lenkeinrichtung (40) zur Überführung des ersten Radpaares (10) von der Geradeausstellung in eine Kurvenstellung, in der die erste Drehachse (DA11) und die zweite Drehachse (DA12) um weniger als 90° zur Längsmittelebene (LME) angewinkelt sind.

3. Erntemaschine (1) nach Anspruch 2,
**gekennzeichnet durch** eine derartige Ausbildung der Lenkeinrichtung (40), dass die erste Drehachse (DA11) und die zweite Drehachse (DA12) eine weitere Drehachse (DA22) eines weiteren Rades (22) des Fahrwerkes in der Kurvenstellung des ersten Radpaares (10) in demselben Schnittpunkt (MP) schneiden.

4. Erntemaschine (1) nach Anspruch 2 oder 3,
**dadurch gekennzeichnet, dass** die Lenkeinrichtung (40) einen ersten Radträger (13), an dem das erste Rad (11) drehbar gelagert ist, und einen zweiten Radträger (14) aufweist, an dem das zweite Rad (12) drehbar gelagert ist und der derart ausgebildet ist, dass in der Geradeausstellung eine Spiegelung seiner Form an der Längsmittelebene (LME) von der Form des ersten Radträgers (13) abweicht.

5. Erntemaschine (1) nach einem der Ansprüche 2 bis 4,
**dadurch gekennzeichnet, dass** die Lenkeinrichtung (40) einen/den ersten Radträger (13), an dem das erste Rad (11) drehbar gelagert ist, und einen/den zweiten Radträger (14) aufweist, an dem das zweite Rad (12) drehbar gelagert ist und der derart angeordnet ist, dass in der Geradeausstellung seine Spiegelung an der Längsmittelebene (LME) relativ zum ersten Radträger (13) zumindest anteilig in die Fahrtrichtung (FR) versetzt ist.

6. Erntemaschine (1) nach einem der Ansprüche 2 bis 5,
**dadurch gekennzeichnet, dass** die Lenkeinrichtung (40) einen ersten Querlenker (15), an dem ein/der erste/r Radträger (13) gelagert ist, und einen zweiten Querlenker (16) aufweist, an dem ein/der zweite/r Radträger (14) gelagert ist und der derart ausgebildet ist, dass in der Geradeausstellung eine Spiegelung der Form des zweiten Querlenkers (16) an der Längsmittelebene (LME) von der Form des ersten Querlenkers (15) abweicht.

7. Erntemaschine (1) nach einem der Ansprüche 2 bis 6,
**dadurch gekennzeichnet, dass** die Lenkeinrichtung (40) einen/den ersten Querlenker (15), an dem ein/der erste/r Radträger (13) gelagert ist, und einen/den zweiten Querlenker (16) aufweist, an dem ein/der zweite/r Radträger (14) gelagert ist und der derart angeordnet ist, dass in der Geradeausstellung eine Spiegelung des zweiten Querlenkers (16) an der Längsmittelebene (LME) relativ zum ersten Querlenker (15) zumindest anteilig in die Fahrtrichtung (FR) versetzt ist.

8. Erntemaschine (1) nach einem der Ansprüche 2 bis 7,
**dadurch gekennzeichnet, dass** die Lenkeinrichtung (40) eine erste Spurstange (17), die an einem/dem ersten Radträger (13) gelagert ist, und eine zweite Spurstange (18) aufweist, die an einem/dem zweiten Radträger (14) gelagert ist, wobei eine Spiegelung ihrer Form und/oder Anordnung an der Längsmittelebene (LME) in der Geradeausstellung von der Form bzw. Anordnung der ersten Spurstange (17) abweicht.

9. Erntemaschine (1) nach Anspruch 8,
**dadurch gekennzeichnet, dass** die Lenkeinrichtung (40) einen Lenkaktor (41) zur Bewegung zumindest einer der Spurstangen (17, 18) in eine Lenkrichtung (R41) aufweist, die um weniger als 90° angewinkelt zur Längsmittelebene (LME) ausgerichtet ist.

10. Erntemaschine (1) nach einem der vorhergehenden Ansprüche,
**dadurch gekennzeichnet, dass** das Fahrwerk zumindest ein zweites Radpaar (20) aufweist, das aus einem ersten Rad (21), das drehbar um eine erste Drehachse (DA21) gelagert ist, und einem zweiten Rad (22) gebildet ist, das drehbar um eine zweite Drehachse (DA22) gelagert ist und dem ersten Rad (21) bezogen auf die Längsmittelebene (LME) zumindest teilweise gegenüberliegend angeordnet ist, wobei die erste Drehachse (DA21) und die zweite Drehachse (DA22) des zweiten Radpaares (20) in einer Geradeausstellung des zweiten Radpaares (10) jeweils rechtwinklig zur Längsmittelebene (LME) ausgerichtet sind.

11. Erntemaschine (1) nach Anspruch 10,
**dadurch gekennzeichnet, dass** das erste Rad (11) des ersten Radpaares (10) dem ersten Rad (21) des zweiten Radpaares (20) und das zweite Rad (12) des ersten Radpaares (10) dem zweiten Rad (22) des zweiten Radpaares (20) bezogen auf die Fahrtrichtung (FR) vorgeordnet sind oder nachgeordnet sind.

12. Erntemaschine (1) nach einem der Ansprüche 10 oder 11,
**gekennzeichnet durch** eine derartige Ausbildung des Fahrwerkes, dass die erste Drehachse (DA21) des zweiten Radpaares (20) zumindest in seiner Geradeausstellung relativ zur zweiten Drehachse (DA22) des zweiten Radpaares (20) in die Fahrtrichtung (FR) versetzt angeordnet ist.

13. Erntemaschine (1) nach einem der Ansprüche 10 bis 12,
**dadurch gekennzeichnet, dass** das Fahrwerk zumindest ein drittes Radpaar (30) aufweist, das aus einem ersten Rad (31), das drehbar um eine erste Drehachse (DA31) gelagert ist, und einem zweiten Rad (32) gebildet ist, das drehbar um eine zweite Drehachse (DA32) gelagert ist und dem ersten Rad (31) bezogen auf die Längsmittelebene (LME) zumindest teilweise gegenüberliegend angeordnet ist, wobei die erste Drehachse (DA31) und die zweite Drehachse (DA32) des dritten Radpaares (30) in einer Geradeausstellung des dritten Radpaares (30) jeweils rechtwinklig zur Längsmittelebene (LME) ausgerichtet sind.

14. Erntemaschine (1) nach einem der vorhergehenden Ansprüche,
**dadurch gekennzeichnet, dass** das erste, zweite oder dritte Radpaar (10) an einem Achskörper (60) gelagert ist, der ein die Längsmittelebene (LME) schneidenden Querabschnitt (63), ein sich in einer Draufsicht vom Querabschnitt (63) in die Fahrtrichtung (FR) erstreckendes, erstes Radträgerende (61), an dem das erste Rad (11) drehbar gelagert ist, und ein sich in der Draufsicht vom Querabschnitt (63) weiter als das erste Radträgerende (61) in die Fahrtrichtung (FR) erstreckendes, zweites Radträgerende (62) umfasst, an dem das zweite Rad (12) drehbar gelagert ist.

15. Erntemaschine (1) nach einem der vorhergehenden Ansprüche,
**gekennzeichnet durch** einen beweglich mit dem Maschinenrahmen (2) verbundenen Erntevorsatz (50), der zumindest ein drehbar um eine Drehachse (DA51) gelagertes Stützrad (51) aufweist, das zumindest in einer Transportstellung des Erntevorsatzes (50) an die Bodenebene (BE) angrenzt und dem/den Radpaar/en (10, 20, 30) bezogen auf die Fahrtrichtung (FR) vorgeordnet ist.
